# EUROPEAN PATENT APPLICATION

(11) **EP 2 675 211 A1**
(43) Date of publication of application: **18.12.2013**
(21) Application number: 11858412.7
(22) Date of filing: 10.02.2011
(51) Int. Cl.: H04W 28/04, H04L 1/16, H04W 72/04

(54) **RESPONSE METHOD, COMMUNICATION SYSTEM AND COMMUNICATION DEVICE**

(71) Applicant: Fujitsu Limited, Kawasaki-shi, Kanagawa 211-8588 (JP)
(72) Inventor: KAWASAKI, Yoshihiro, Kawasaki-shi Kanagawa 211-8588 (JP)
(74) Representative: Ward, James Norman
(86) International application number: PCT/JP2011/052904
(87) International publication number: WO 2012/108042

(57) **Abstract**

A first communication apparatus (1) transmits a signal to a second communication apparatus (2) in one of a plurality of time frames contained in each of radio frames, and the second communication apparatus (2) replies to the first communication apparatus (1) with information indicating whether or not the signal has been successfully decoded. The first communication apparatus (1) transmits signals to the second communication apparatus (2) in a plurality of frequency bands in an identical time frame. The second communication apparatus (2) receives from the first communication apparatus (1), the signals transmitted in the plurality of frequency bands in the identical time frame, generates a reply signal for a signal received in each of the plurality of frequency bands, the reply signal indicating whether the received signal has been successfully decoded, and transmits a plurality of the reply signals separately in a plurality of time frames, each of the plurality of reply signals being generated for each of signals received in the plurality of frequency bands in the identical time frame.

## Description

### FIELD

Embodiments discussed herein relate to a technique for replying to a transmission side with information indicating whether or not a received signal has been successfully decoded.

### BACKGROUND

A technique is known by which a reply signal indicating whether or not a received signal has been successfully decoded is transmitted to a transmission-side communication apparatus. An example of such a reply signal is an acknowledgement (ACK) signal/negative acknowledgement (NACK) signal.

An apparatus which transmits a signal is referred to as a first communication apparatus. An apparatus which receives the signal is referred to as a second communication apparatus. Furthermore, a radio link on which signals are transmitted from the first communication apparatus to the second communication apparatus is referred to as a first link. A radio link on which signals are transmitted from the second communication apparatus to the first communication apparatus is referred to as a second link.

When a signal is transmitted on the first link from the first communication apparatus to the second communication apparatus, the second communication apparatus receives and decodes the signal. Upon successfully decoding the signal, the second communication apparatus transmits an acknowledgement signal to the first communication apparatus via the second link. Upon failing to decode the signal, the second communication apparatus transmits a negative acknowledgement signal to the first communication apparatus via the second link.

A delivery confirmation information transmission method illustrated below is known which is used by a mobile communication system including a user apparatus and a base station apparatus which communicates with the user apparatus. The method includes a step of transmitting a shared channel from the base station apparatus to the user apparatus, a step of uniquely associating transmission-related information on the shared channel with two or more radio resources for transmitting delivery confirmation information for the shared channel in two or more time frames in advance, and a step of transmitting the delivery confirmation information from a mobile station to the base station apparatus in two or more time frames using the two or more radio resources identified by the association between the transmission-related information and the radio resources.

Furthermore, a mobile terminal apparatus for a wireless communication system illustrated below is known which uses a relatively narrow system band as a component carrier and which transmits and receives radio signals via an uplink and a downlink assigned to a relatively wide system band composed of a plurality of aggregate component carriers. The mobile terminal apparatus includes a coding and data modulating unit which encodes and data-modulates an uplink control signal containing report information on the individual component carriers assigned to the downlink, and a mapping unit which maps the control signal with the coding and the data modulation performed thereon to an uplink communication channel. The coding and data modulating unit encodes and data-modulates a control signal for the aggregate component carriers assigned to the downlink. The mapping unit maps the uplink control signal for the aggregate component carriers to the uplink communication channel for the relatively wide system band, which corresponds to the aggregate component carriers. The report information is CQI or the ACK/NACK.

### PRIOR ART DOCUMENTS

Patent document 1: International Publication Pamphlet No. 2008/114663
Patent document 2: Japanese Laid-open Patent Publication No. 2010-74754

### SUMMARY

Signals may be transmitted to the same communication apparatus in a plurality of frequency bands in one of a plurality of subframes contained in each radio frame, and a reply signal may be created for each signal transmitted in a corresponding one of the plurality of frequency bands. For example, according to LTE (Long Term Evolution)-Advanced examined by 3GPP (The 3rd Generation Partnership Project), a plurality of transport blockstransmitted to one user apparatus by simultaneously using a plurality of frequency bands on one subframe. Each of the frequency bands has a width of, for example, up to 20 MHz. Up to two transport blocks may be transmitted in one frequency band. A reply signal is created for each data transmitted in each transport block. The number of simultaneously transmitted transport blocks is equal to the number of reply signals.

It is assumed that signals are transmitted on the first link in a respective plurality of frequency bands in one subframe and that reply signals generated for the signals transmitted in the respective plurality of frequency bands are transmitted on the second link. Here, when the number of reply signals that can be transmitted in one subframe on the second link is limited, the number of signals that can be transmitted in one subframe on the first link is limited accordingly. As an example of such a case, degradation of radio-link quality on the second link, shortage of transmission power available to the mobile terminal needed to satisfy necessary transmission characteristics, or control of transmission power for suppression of interference with neighboring base stations, or the like may be considered.

An object of an apparatus or a method disclosed herein is that if signals are transmitted in a plurality of frequency bands in one subframe and a reply signal is generated which indicates whether or not each of the signals transmitted in the respective bands has been successfully decoded, the signals are transmitted in any number of frequency bands regardless of the number of the reply signals transmitted in one subframe.

According to an aspect of a method, there is provided a reply method in which a signal is transmitted from a first communication apparatus to a second communication apparatus in one of a plurality of time frames contained in each radio frame and in which the second communication apparatus replies to the first communication apparatus with information indicating whether or not the signal has been successfully decoded, the method including, transmitting, by the first communication apparatus, signals to the second communication apparatus in a plurality of frequency bands in an identical time frame, receiving, by the second communication apparatus from the first communication apparatus, the signals transmitted in the plurality of frequency bands in the identical time frame, generating, by the second communication apparatus, a reply signal for a signal received in each of the plurality of frequency bands, the reply signal indicating whether the received signal has been successfully decoded, and transmitting, by the second communication apparatus, a plurality of the reply signals separately in a plurality of time frames, each of the plurality of reply signals being generated for each of signals received in the plurality of frequency bands in the identical time frame.

According to an aspect of an apparatus, there is provided a communication system in which signals are transmitted from a first communication apparatus to a second communication apparatus in a plurality of time frames contained in each radio frame. The first communication apparatus includes a signal transmission unit which transmits signals to the second communication apparatus in a plurality of frequency bands in an identical time frame, a reply signal reception unit which receives a reply signal generated for a signal transmitted in each of the plurality of frequency bands in the identical time frame, the reply signal indicating whether the transmitted signal has been successfully decoded.

The second communication apparatus includes a signal reception unit which receives, from the first communication apparatus, signals transmitted in the plurality of frequency bands in the identical time frame, a reply signal generation unit which generates a reply signal for a signal received in each of the plurality of frequency bands, the reply signal indicating whether the received signal has been successfully decoded, and a reply signal transmission unit which transmits a plurality of the reply signals to the first communication apparatus separately in a plurality of time frames, each of the plurality of reply signals being generated for each of signals received in the plurality of frequency bands in the identical time frame.

According to another aspect of an apparatus, there is provided a communication apparatus which transmits signals in a plurality of time frames contained in each radio frame, the communication apparatus including a signal transmission unit which transmits the signals in a plurality of frequency bands in an identical time frame, and a reply signal reception unit which receives a reply signal generated for a signal transmitted in each of the plurality of frequency bands, the reply signal indicating whether the transmitted signal has been successfully decoded. The reply signal reception unit receives the reply signals transmitted separately in a plurality of time frames, each of the plurality of reply signals being generated for each of signals received in the plurality of frequency bands in the identical time frame.

According to another aspect of an apparatus, there is provided a communication apparatus which receives signals transmitted in a plurality of time frames contained in each radio frame, the communication apparatus including a signal reception unit which receives the signals transmitted in a plurality of frequency bands in an identical time frame, a reply signal generation unit which generates a reply signal for a signal received in each of the plurality of frequency bands, the reply signal indicating whether the received signal has been successfully decoded, and a reply signal transmission unit which transmits a plurality of the reply signals separately in a plurality of time frames, each of the plurality of reply signals being generated for each of signals received in the plurality of frequency bands in the identical time frame.

According to the apparatus or method disclosed herein, when signals are transmitted in a plurality of frequency bands in one subframe and a reply signal is generated which indicates whether or not each of the signals transmitted in the respective bands has been successfully decoded, the signals are transmitted in any number of frequency bands regardless of the number of the reply signals transmitted in one subframe.

The object and advantages of the invention will be realized and attained by means of the elements and combinations particularly pointed out in the claims. It is to be understood that both the foregoing general description and the following detailed description are exemplary and explanatory and are not restrictive of the invention, as claimed.

### BRIEF DESCRIPTION OF THE DRAWINGS

FIG. 1 is a diagram depicting an example of configuration of a communication system.
FIG. 2 is a diagram illustrating an example of hardware configuration of a first communication apparatus.
FIG. 3 is a diagram of configuration of a first example of the first communication apparatus.
FIGS. 4A is a diagram illustrating a frame structure.
FIGS. 4B is a diagram illustrating a frame structure.
FIG. 5 is a diagram depicting an example of frame specification information.
FIG. 6 is a diagram of configuration of a first example of a second communication apparatus.
FIG. 7 is a diagram of configuration of an example of a retransmission control unit of the second communication apparatus.
FIG. 8 is a diagram illustrating a first example of processing carried out in the communication system.
FIG. 9 is a diagram of configuration of a second example of the first communication apparatus.
FIG. 10 is a diagram of configuration of a second example of the second communication apparatus.
FIG. 11 is a diagram illustrating a second example of processing carried out in the communication system.

### DESCRIPTION OF EMBODIMENTS

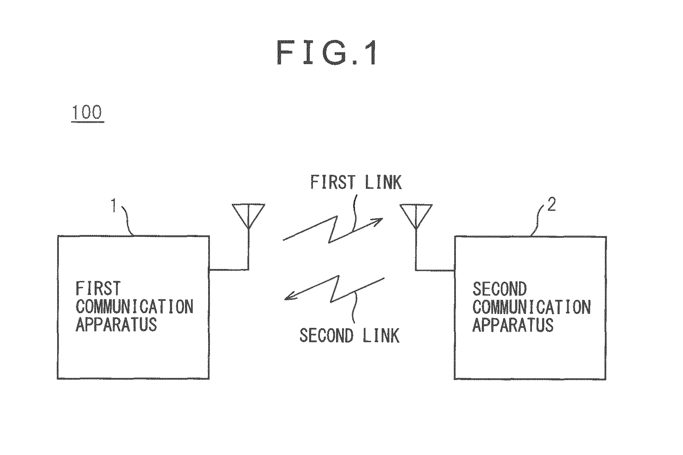

Preferred embodiments will be illustrated below with reference to the attached drawings. FIG. 1 is a diagram depicting an example of configuration of a communication system. A communication system 100 includes a first communication apparatus 1 and a second communication apparatus 2. A first link is formed between the first communication apparatus 1 and the second communication apparatus 2 so that signals are transmitted on the first link from the first communication apparatus 1 to the second communication apparatus 2 by wireless communication. Furthermore, a second link is formed between the first communication apparatus 1 and the second communication apparatus 2 so that signals are transmitted on the second link from the second communication apparatus 2 to the first communication apparatus 1 by wireless communication.

For example, the first communication apparatus 1 and the second communication apparatus 2 may be a base station apparatus and a mobile station apparatus, respectively, in a mobile communication system. In this case, the first link is a downlink, and the second link is an uplink. For example, the first communication apparatus 1 and the second communication apparatus 2 may be a mobile station apparatus and a base station apparatus, respectively. In this case, the first link is an uplink, and the second link is a downlink. However, the description herein is not intended to limit the first communication apparatus 1 and the second communication apparatus 2 to the base station apparatus and the mobile station apparatus. The communication system 100 disclosed herein is applicable to various communication systems.

The first communication apparatus 1 transmits a signal to the second communication apparatus 2 via the first link. The second communication apparatus 2 decodes the received signal. The second communication apparatus 2 generates a reply signal indicating whether or not the decoding has been successful, and transmits the reply signal to the first communication apparatus via the second link.

In the description below, a signal transmitted from the first communication apparatus 1 to the second communication apparatus 2 to allow the second communication apparatus 2 to determine whether or not the decoding has been successful is sometimes referred to as "transmit data" in order to be distinguished from other signals. However, the description herein is not intended to limit the signal allowing the second communication apparatus 2 to determine whether or not the decoding has been successful, to a particular type of signal.

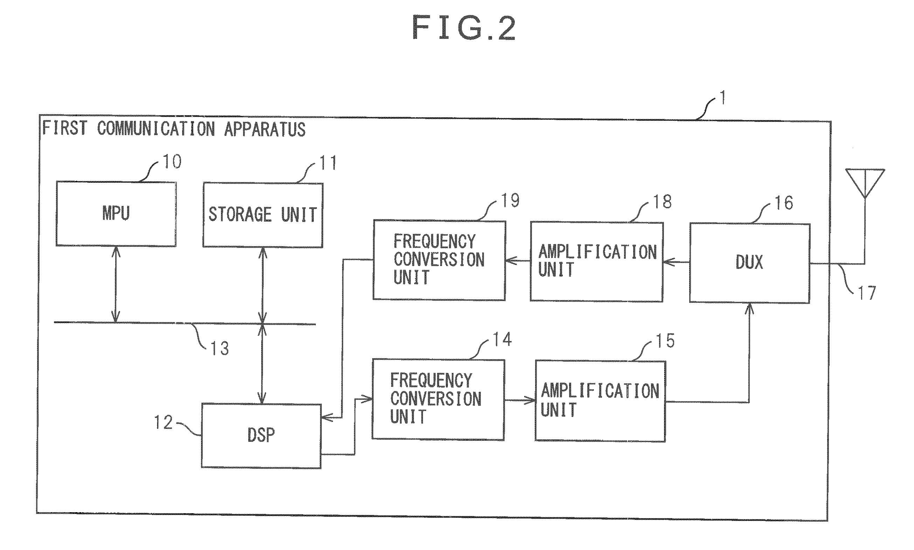

FIG. 2 is a diagram illustrating an example of hardware configuration of the first communication apparatus. The first communication apparatus includes a microprocessor 10, a storage unit 11, a digital signal processor 12, and a bus 13. Furthermore, the first communication apparatus 1 includes frequency conversion units 14 and 19, amplification units 15 and 18, a duplexer 16, and an antenna 17. In the following description and drawings, the microprocessor, the digital signal processor, and the duplexer are sometimes referred to as an "MPU", a "DSP", and a "DUX", respectively.

The MPU 10, the storage unit 11, and the DSP 12 are connected together by the bus 13. The storage unit 11 stores various programs and data for controlling operation of the first communication apparatus 1. The storage unit 11 may include a memory, a hard disk, or a nonvolatile memory.

The MPU 10 carries out each process for controlling the operation of the first communication apparatus 1 by executing a program stored in the storage unit 11. Furthermore, the DSP 12 carries out each process mainly regarding wireless communication with the second communication apparatus 2 by executing a program stored in the storage unit 11. The storage unit 11 stores the programs executed by the MPU 10 and the DSP 12 and data temporarily used by the programs.

When the first communication apparatus 1 is a base station apparatus, the first communication apparatus 1 may include a higher apparatus which controls the first communication apparatus 1, a higher node apparatus which connects the first communication apparatus 1 to a core network, and a network processor which carries out processes of transmitting and receiving signals to and from other base station apparatuses.

The frequency conversion unit 14 converts a signal generated by the DSP 12 and transmitted from the first communication apparatus 1 to the second communication apparatus 2, into an RF signal. The amplification unit 15 amplifies the RF signal. The amplified RF signal is transmitted via the DUX 16 and the antenna 17.

The radio signal transmitted by the second communication apparatus 2 is received at the antenna 17. The received signal is input to the amplification unit 18 via the DUX 16. The amplification unit 18 amplifies the received signal. The frequency conversion unit 19 converts the amplified received signal with the radio frequency into a baseband signal. The baseband signal is processed by the DSP 12.

The second communication apparatus 2 may also have a configuration similar to a configuration depicted in FIG. 2. The hardware configuration depicted in FIG. 2 is only an example of a hardware configuration that implements the first communication apparatus 1 and the second communication apparatus 2. Any other hardware configuration may be adopted provided that the configuration carries out processing described herein.

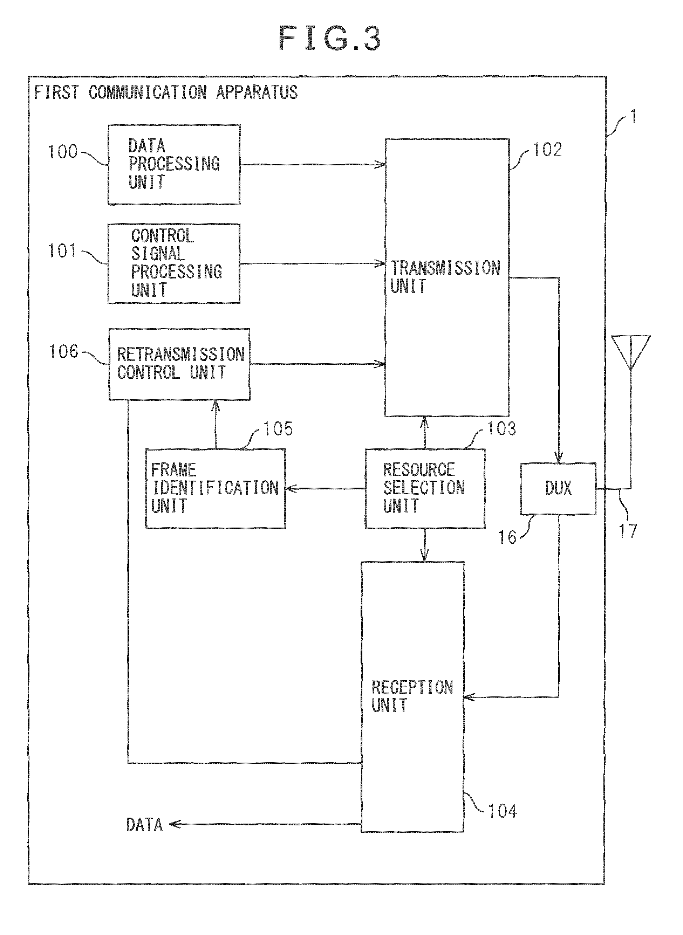

FIG. 3 is a diagram of configuration of a first example of the first communication apparatus. The MPU 10 and the DSP 12 in FIG. 2 carry out information processing using components depicted in FIG. 3 by executing the programs stored in the storage unit 11. This also applies to other embodiments of the first communication apparatus 1. FIG. 3 mainly depicts functions regarding the following description. Thus, the first communication apparatus 1 may include components other than the depicted components.

The first communication apparatus 1 includes a data processing unit 100, a control information processing unit 101, a transmission unit 102, a resource selection unit 103, the DUX 16, the antenna 17, a reception unit 104, a frame identification unit 105, and a retransmission control unit 106. The data processing unit 100 and the transmission unit 102 are an example of a signal transmission unit. The reception unit 104 and the retransmission control unit 106 are an example of a reply signal reception unit.

The data processing unit 100 processes data to be transmitted from the first communication apparatus 1 to the second communication apparatus 2. The data processing unit 100 encodes the data and outputs the encoded data. For example, when the first communication apparatus 1 is a base station apparatus, the first communication apparatus 1 may receive data to be transmitted to the second communication apparatus 2 from a higher node apparatus, encode the data, and output the encoded data. For example, when the first communication apparatus 1 is a mobile station apparatus, the data processing unit 100 may generate data to be transmitted to the second communication apparatus 2, encode the data, and output the encoded data. The data output by the data processing unit 100 is an example of transmit data for which the second communication apparatus 2 determines whether or not decoding has been successful.

The control information processing unit 101 generates a control signal to be transmitted to the second communication apparatus 2, encodes the control signal in accordance with a predetermined rule, and outputs the encoded control signal. The control signal may be information that allows the second communication apparatus 2 to demodulate and decode transmit data transmitted by the first communication apparatus 1. Such information may specify a coding scheme applied to transmit data and radio resources for use in transmission of transmit data.

The resource management unit 103 manages radio resources of the first link used by the first communication apparatus 1 and radio resources of the second link used by the second communication apparatus 2. The resource management unit 103 provides information on the current assignment status of the radio resources to the transmission unit 102, the reception unit 104, and the frame identification unit 105.

The transmission unit 102 modulates and multiplexes data output by the data processing unit 100 and control information output by the control information processing unit 101, in accordance with the information on the assignment status provided by the resource management unit 103. The modulated and multiplexed signal is transmitted via the DUX 16 and the antenna 17.

The reception unit 104 demodulates and decodes a transmit signal from the second communication apparatus 2 based on the information on the assignment status of the radio resources of the second link. The reception unit 104 receives a reply signal transmitted by the second communication apparatus 2 in response to transmit data. The reception unit 104 outputs the reply signal to the retransmission control unit 106.

As illustrated below, when transmit data is transmitted in each of a plurality of frequency bands within one subframe, the second communication apparatus 2 generates a reply signal for each of the transmit data received in the respective plurality of frequency bands. In the following description, an aggregate of reply signals generated for the respective transmit data received in the plurality of frequency bands is sometimes referred to as a "group of reply signals".

The second communication apparatus 2 transmits the plurality of reply signals contained in the group of reply signals to the first communication apparatus 1 in a plurality of subframes. In other words, the second communication apparatus 2 transmits one of the reply signals in the group of reply signals, in one of the plurality of subframes, and transmits another reply signal in the group of reply signals, in another subframe.

The frame identification unit 105 receives, from the resource selection unit 103, information on frequency bands assigned for the transmission of transmit data to the second communication apparatus 2 and information specifying frequency bands and subframes assigned for the transmission of reply signals from the second communication apparatus 2. According to the frequency bands in which the transmit data has been transmitted, the frame identification unit 105 determines which of the subframes is used to transmit reply signals transmitted by the second communication apparatus 2 in response to the transmit data transmitted by the first communication apparatus 1. The frame identification unit 105 notifies the retransmission control unit 106 of the subframe in which the reply signals to the transmit data are to be transmitted. An example of a method for identifying a subframe according to frequency bands for transmit data will be illustrated below.

The retransmission unit 106 receives the reply signals transmitted by the second communication apparatus 2. The retransmission control unit 106 identifies the reply signals corresponding to the respective transmit data transmitted in the plurality of frequency bands in accordance with the notification of the subframe acquired from the frame identification unit 105. When an acknowledgement signal is received for certain transmit data, the retransmission control unit 106 may instruct the transmission unit 102 to transmit a signal following the transmitted data. When a negative acknowledgement signal is received for certain transmit data, the retransmission control unit 106 may instruct the transmission unit 102 to retransmit the same data as the data having failed to be transmitted.

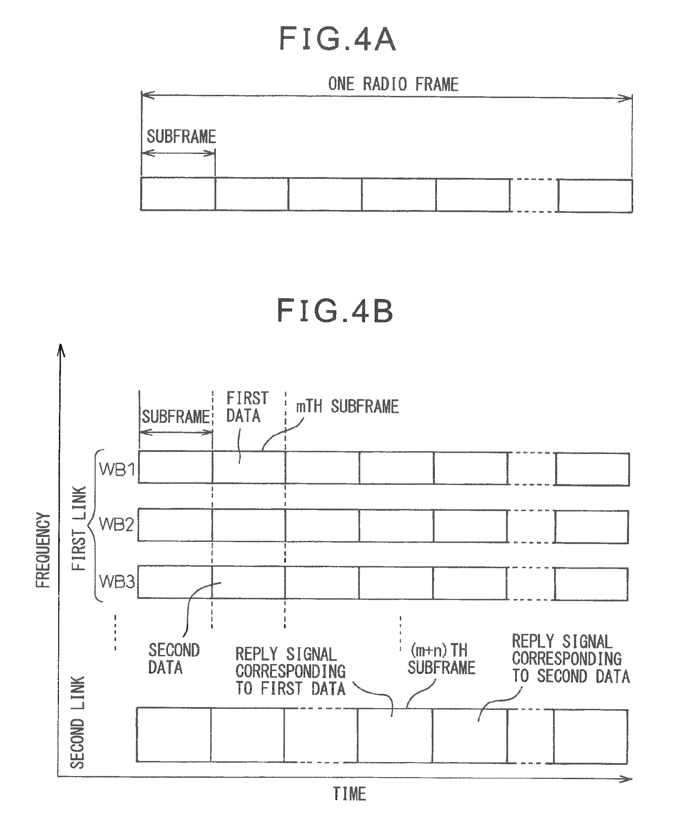

FIG. 4A is a diagram illustrating frame structures for the first link and the second link. As illustrated above, one radio frame is divided into a plurality of subframes. As depicted in FIG. 4B, transmit data is transmitted on the first link in each of a plurality of carriers, i.e., a plurality of frequency bands WB1, WB2, WB3 .... The frequency bands WB1, WB2, WB3 ... may be, for example, component carriers specified in LTE specifications. On the other hand, on the second link, signals are transmitted in at least one frequency band WB.

In the example depicted in FIG. 4B, the first communication apparatus 1 transmits first transmit data and second transmit data in frequency bands WB1 and WB3, respectively, in the mth subframe. The second communication apparatus 2 transmits reply signals corresponding to the first transmit data and the second transmit data in the (m+n)th subframe and the (m+n+1)th subframe. Each of "m" and "n" is a positive integer.

In a certain embodiment, the subframes in which reply signals corresponding to respective transmit data are transmitted, may be defined according to the frequency bands in which the transmit data has been transmitted. For example, the subframes in which reply signals corresponding to respective transmit data are transmitted, may be defined in accordance with a predetermined rule for specifying transmit frames for the reply signals according to the frequency bands in which the transmit data has been transmitted. In the following description, the predetermined rule for specifying transmit frames for reply signals corresponding to transmit data according to the frequency bands in which the transmit data has been transmitted is sometimes referred to as a "frame specification rule". In this case, in accordance with the frame specification rule, the frame identification unit 105 identifies the subframes in which reply signals corresponding to transmit data transmitted in certain frequency bands are transmitted.

In a certain embodiment of the frame specification rule, a subframe that starts transmission of reply signals may be specified by a constant "n". Then, reply signals corresponding to K transmit data transmitted in one subframe may be transmitted in K consecutive subframes starting in the (m+n)th subframe and ending in the (m+n+K-1)th subframe.

For example, in a certain embodiment, a reply signal corresponding to transmit data transmitted using a frequency band with higher frequencies may be transmitted in a subframe transmitted earlier. In another embodiment, a replay signal corresponding to transmit data transmitted using a frequency band with lower frequencies may be transmitted in a subframe transmitter earlier. Various rules may be adopted for the specification of subframes according to frequency bands. The description herein is not intended to limit the rule for specifying subframes according to frequency bands to the above-described rule.

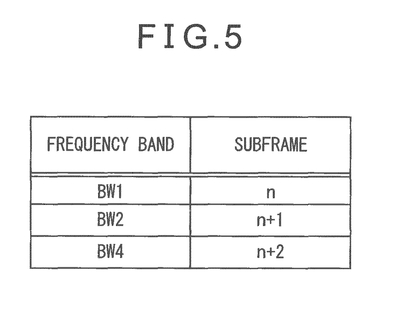

In a certain embodiment, the subframes in which reply signals corresponding to respective transmit data are transmitted may be specified in accordance with frame specification information that specifies transmit frames for the reply signals according to the frequency bands in which the transmit data has been transmitted. FIG. 5 depicts an example of frame specification information. In a certain embodiment, the frame specification information may have a table structure with a frequency band section and a subframe section.

The frame specification information in the depicted example specifies the (m+n)th, (m+n+1)th, and (m+n+2)th subframes as the subframes in which reply signals corresponding to transmit data transmitted in the frequency bands BW1, BW2, and BW4 in the mth subframe respectively are transmitted. In accordance with the frame specification information, the frame identification unit 105 identifies the subframes in which the reply signals corresponding to the transmit data transmitted in the respective frequency bands are transmitted. The first communication apparatus 1 may store the frame specification information in the storage unit 11.

According to the frame specification information, a subframe transmitted earlier may be assigned to a reply signal corresponding to transmit data transmitted using a frequency band with higher frequencies. In another embodiment, a subframe transmitted earlier may be assigned to a reply signal corresponding to transmit data transmitted using a frequency band with lower frequencies.

When subframes are specified in accordance with the frame specification information, the order of transmission of the subframes in which reply signals for transmit data transmitted in respective frequency bands with the transmit data transmitted therein may be defined in accordance with priorities assigned to the frequency bands. In a certain embodiment, a plurality of frequency bands on the first link includes a frequency band preferentially used and a frequency band used with a priority lower than the priority of the frequency band preferentially used. The frequency band preferentially used may be, for example, a downlink primary component carrier specified in the LTE specifications.

For example, when the first communication apparatus 1 is a base station apparatus, the first communication apparatus 1 may transmit control information such as system information, using a frequency band used with a higher priority. In this case, the frame specification information may specify, as a subframe in which a reply signal for transmit data transmitted in a frequency band used with a higher priority is transmitted, a subframe transmitted earlier than the subframes in which reply signals for transmit data transmitted in the other frequency bands are transmitted.

When a reply signal for transmit data transmitted in a frequency band used with a higher priority is transmitted in a subframe transmitted earlier, retransmission control can be performed earlier on the transmit data transmitted in this frequency band. As a result, a possible delay in transmission in the frequency band preferentially used can be suppressed.

Furthermore, the frame specification information may specify, as a subframe in which a reply signal for transmit data transmitted in a frequency band assigned for the transmission of real-time signals is transmitted, a subframe transmitted earlier than the subframes in which reply signals for transmit data transmitted in the other frequency bands are transmitted. Here, the "real-time stream signal" refers to a signal periodically transmitted at a constant or almost constant time interval. An example of the real-time stream signal is voice data or video data.

When a reply signal for transmit data transmitted in the frequency band assigned for the transmission of real-time stream signals is transmitted in a subframe transmitted earlier, retransmission control can be performed earlier on this real-time stream signal. As a result, a possible delay in transmission can be suppressed in the transmission of real-time stream signals, for which a shorter delay is desired.

The specification based on the frame specification rule may be combined with the specification based on the frame specification information. For example, subframes may be specified based on the frame specification rule for the remaining frequencies for which subframes fail to be specified based on the frame specification information. For example, a certain subframe may be assigned to a reply signal for transmit data included in a plurality of transmit data and transmitted in a frequency band used with a higher priority, and the subsequent subframes may be assigned to reply signals for the remaining transmit data, in accordance with the frame specification rule.

For example, it is assumed that reply signals corresponding to K transmit data transmitted in the mth subframe are transmitted in K subframes starting in the (m+n)th subframe and ending in the (m+n+K-1)th subframe. The (m+n)th subframe is assigned for the transmission of a reply signal for transmit data transmitted in a frequency band assigned for the transmission of real-time stream signals. The K-1 subframes starting in the (m+n+1)th subframe and ending in the (m+n+K-1)th subframe are assigned to the remaining (K-1) transmit data in accordance with the frame specification rule.

In another embodiment, among the plurality of transmit data, a certain subframe may be assigned for the transmission of a reply signal for transmit data transmitted in the frequency band assigned for the transmission of real-time stream signals, and the subsequent subframes may be assigned to reply signals for the remaining transmit data in accordance with the frame specification rule.

For example, it is assumed that reply signals corresponding to K transmit data transmitted in the mth subframe are transmitted in K subframes starting in the (m+n)th subframe and ending in the (m+n+K-1)th subframe. The (m+n)th subframe is assigned for the transmission of a reply signal for transmit data transmitted in a frequency band used with a higher priority. The K-1 subframes starting in the (m+n+1)th subframe and ending in the (m+n+K-1)th subframe are assigned to the remaining (K-1) transmit data in accordance with the frame specification rule.

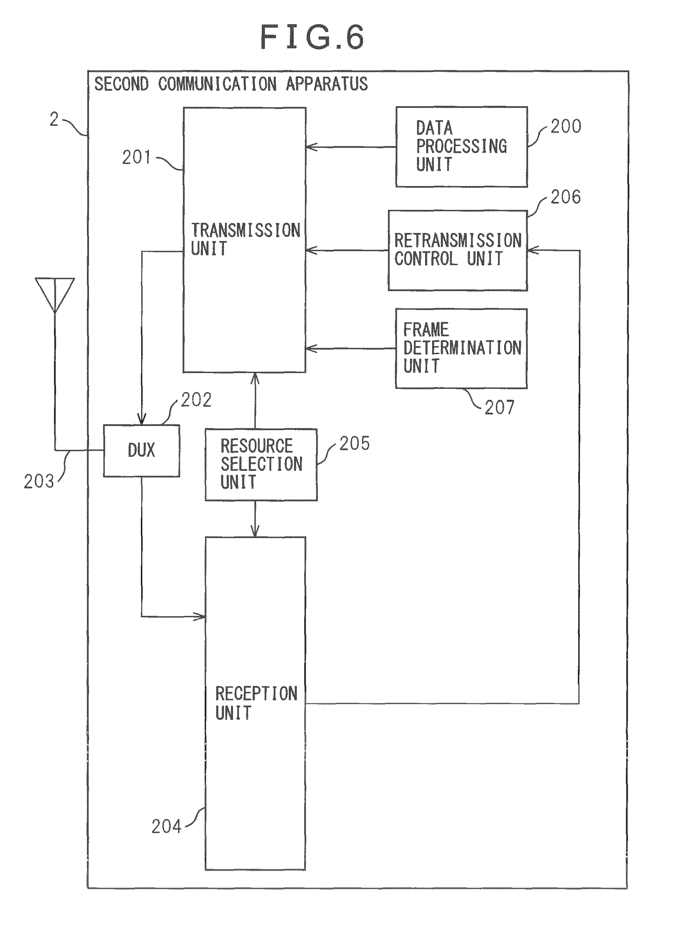

Now, the configuration and functions of the second communication apparatus will be illustrated. FIG. 6 is a diagram of configuration of a first example of the second communication apparatus. The MPU 12 and the DSP 12 in FIG. 2 carry out information processing using components depicted in FIG. 6 by executing the programs stored in the storage unit 11. This also applies to other embodiments of the second communication apparatus 2. FIG. 6 mainly depicts functions regarding the following description. Thus, the second communication apparatus 2 may include components other than the depicted components.

The second communication apparatus 2 includes a data processing unit 200, a transmission unit 201, a DUX 202, an antenna 203, a reception unit 204, a resource selection unit 205, a retransmission control unit 206, and a frame determination unit 207. The reception unit 204 is an example of a signal reception unit. The transmission unit 201 is an example of a reply signal transmission unit.

The data processing unit 200 processes data to be transmitted from the second communication apparatus 2 to the first communication apparatus 1. The data processing unit 200 encodes the data and outputs the encoded data. For example, when the second communication apparatus 2 is a mobile station apparatus, the data processing unit 200 may generate data to be transmitted to the first communication apparatus 1, encode the data, and output the encoded data. For example, when the second communication apparatus 2 is a base station apparatus, the second communication apparatus 2 may receive data to be transmitted to the first communication apparatus 1, from a higher node apparatus, code the data, and output the coded data.

The resource selection unit 205 manages radio resources of the second link used by the second communication apparatus 2 and radio sources of the first link used by the first communication apparatus 1. The resource selection unit 205 provides information on the current assignment status of the radio resources to the transmission unit 201 and the reception unit 204.

The transmission unit 201 modulates and multiplexes data output by the data processing unit 200 and reply signals output by the retransmission control unit 207, illustrated below, in accordance with the information on the assignment status provided by the resource selection unit 205. The transmission unit 201 transmits the multiplexed signal via the DUX 202 and the antenna 203.

The reception unit 204 demodulates and decodes a transmit signal from the first communication apparatus 1 based on the information on the assignment status of the radio resources of the first link. The retransmission control unit 206 determines whether or not the reception unit 204 has successfully decoded the transmit data from the first communication apparatus 1. The retransmission control unit 206 then generates a reply signal indicating whether or not the decoding has been successful.

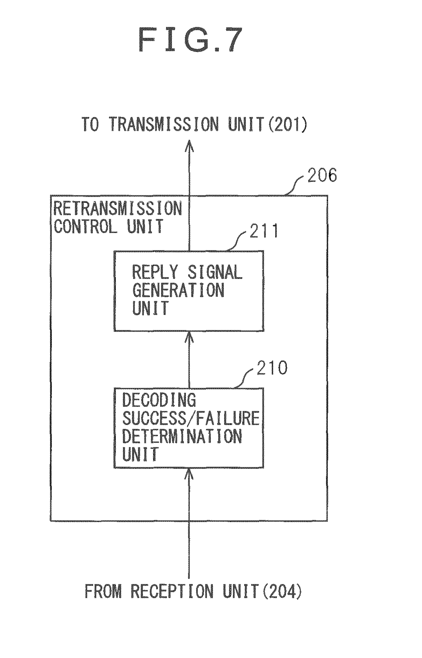

FIG. 7 is a diagram of configuration of an example of the retransmission control unit 206 of the second communication apparatus. The retransmission control unit 206 includes a decoding success/failure determination unit 210 which determines whether or not the reception unit 204 has successfully decoded the transmit data from the first communication apparatus 1, and a reply signal generation unit 211 which generates a reply signal indicating the result of the determination. The reply signal is output to the transmission unit 201.

The frame determination unit 207 determines which subframe is used to transmit the reply signal generated by the retransmission control unit 206 in association with the transmit data, according to the frequency band in which the transmit data has been transmitted. In a certain embodiment, the frame determination unit 207 may identify the subframe in which the reply signal is transmitted, in accordance with the same rule as the frame specification rule used by the frame identification unit 105 of the first communication apparatus 1.

Furthermore, in a certain embodiment, the frame determination unit 207 may determine the subframe in which the reply signal is transmitted, in accordance with the same information as the frame specification information used by the frame identification unit 105. The frame determination unit 207 may combine the specification based on the frame specification rule with the specification based on the frame specification information. The transmission unit 201 transmits the reply signal in the subframe determined by the frame determination unit 207.

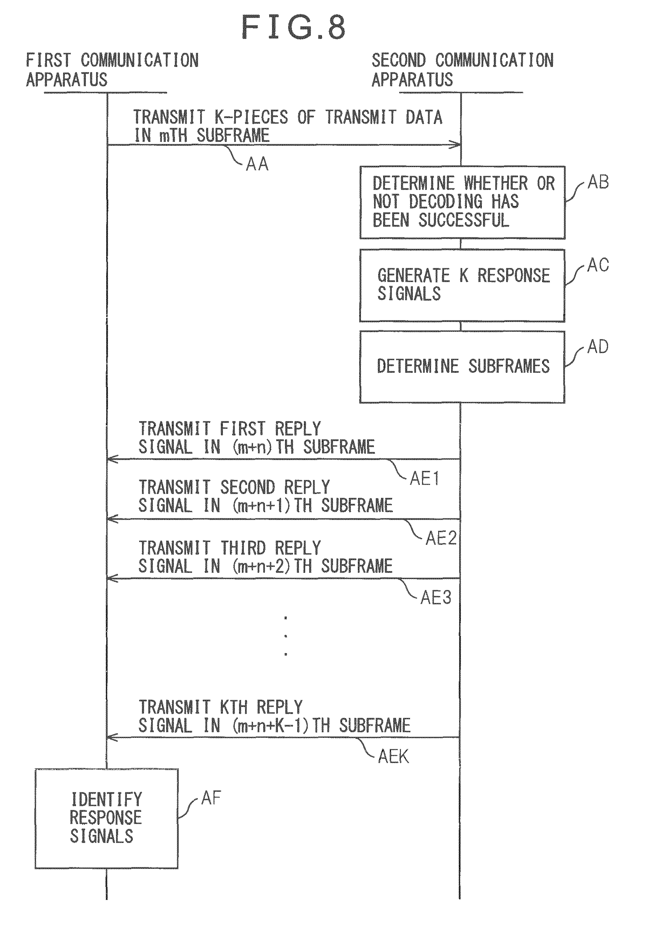

Now, general processing carried out in the communication system 100 will be illustrated. FIG. 8 is a diagram illustrating a first example of processing carried out in the communication system 100. In other embodiments, operations AA to AD, AE1 to AEK, and AF described below may be steps.

In the operation AA, the transmission unit 102 of the first communication apparatus 1 transmits K-pieces of transmit data in the mth subframe. The transmission unit 102 transmits the K transmit data in different frequency bands.

In the operation AB, the decoding success/failure determination unit 210 of the second communication apparatus 2 determines whether or not each of the K transmit data has been successfully decoded. In the operation AC, the reply signal generation unit 211 generates a reply signal indicating whether or not each of the K transmit data has been successfully decoded.

In the operation AD, the frame determination unit 207 determines K subframes (starting in the (m+n)th subframe and ending in the (m+n+K-1)th subframe) assigned for the transmission of a plurality of reply signals included in a group of reply signals.

In the operations AE1 to AEK, the transmission unit 201 transmits, in the (m+n)th subframe to the (m+n+K-1)th subframe, the reply signals to which the respective subframes are assigned. The retransmission control unit 106 of the first communication apparatus 1 receives the reply signals.

In the operation AF, the frame identification unit 105 identifies the subframes in which the reply signals corresponding to the transmit data transmitted in the respective frequency bands are transmitted. The frame identification unit 105 notifies the retransmission control unit 106 of the transmit frames for the reply signals for the respective transmit data. The retransmission control unit 106 identifies the reply signals corresponding to the transmit data transmitted in the respective frequency bands, in accordance with the notification from the frame identification unit 105.

Furthermore, in a certain embodiment, the above-described method for transmitting reply signals may be used exclusively under a predetermined condition. This is implemented as follows. First, the second communication apparatus determines whether the transmission from the second communication apparatus to the first communication apparatus has insufficient wireless quality or the second communication apparatus provides insufficient transmission power. For the determination, wireless quality or reception power may be measured and used or transmission power preliminarily indicated to the first communication apparatus may be used. Then, the second communication apparatus can determine whether or not to transmit the reply signals separately using a plurality of time frames, the reply signals being generated for signals received in a plurality of frequency bands within the same time frame. The second communication apparatus then notifies the first communication apparatus of the contents of the determination.

Thus, the method for transmitting reply signals can be used exclusively when the radio-link quality or the maximum transmission power is low. Otherwise, a usual method for transmitting reply signals may be used. Furthermore, the notification from the second communication apparatus to the first communication apparatus allows the method for transmitting reply signals to be switched synchronously between the second communication apparatus and the first communication apparatus. Thus, the appropriate method for transmitting reply signals can be selected depending on a wireless environment.

According to the present embodiment, when the first communication apparatus 1 transmits transmit data in a plurality of frequency bands in one subframe, the second communication apparatus 2 transmits reply signals corresponding to the transmit data to the first communication apparatus 1 in a plurality of subframes. Thus, for a plurality of transmit data transmitted by the first communication apparatus 1 in one subframe, the second communication apparatus 2 can transmit reply signals the number of which is larger than the number of reply signals transmitted per subframe. Hence, the first communication apparatus 1 can determine the number of transmit data transmitted to the second communication apparatus 2 per subframe, regardless of the number of reply signals transmitted by the second communication apparatus 2 per subframe.

In particular, when it is undesirable that the first communication apparatus 1 transmits transmit data over a plurality of consecutive subframes, a possible signal delay can be reduced by transmitting a plurality of transmit data in one subframe. For example, when the first communication apparatus 1 performs intermittent transmission in order to save power, data transmission over a plurality of consecutive subframes is limited.

Furthermore, the first communication apparatus 1 is a base station apparatus which covers a large cell. When a smaller cell is present in the large cell, the first communication apparatus 1 may periodically stop the data transmission in order to reduce interference with the smaller cell. Even in such a case, the first communication apparatus 1 suffers from the limitation of the data transmission over a plurality of consecutive subframes.

Even when the data transmission over a plurality of subframes from the first communication apparatus 1 is limited as illustrated above and the number of reply signals per subframe is limited, the first communication apparatus 1 according to the first embodiment can transmit a plurality of transmit data in one subframe and thus suppress a delay in data transmission.

When the subframes in which the respective reply signals are transmitted are defined in accordance with the frame specification information, the frame specification information is desirably shared between the first communication apparatus 1 and the second communication apparatus 2. In an embodiment illustrated below, the first communication apparatus 1 generates and transmits frame specification information to the second communication apparatus 2 so that the first communication apparatus 1 and the second communication apparatus 2 can share the frame specification information.

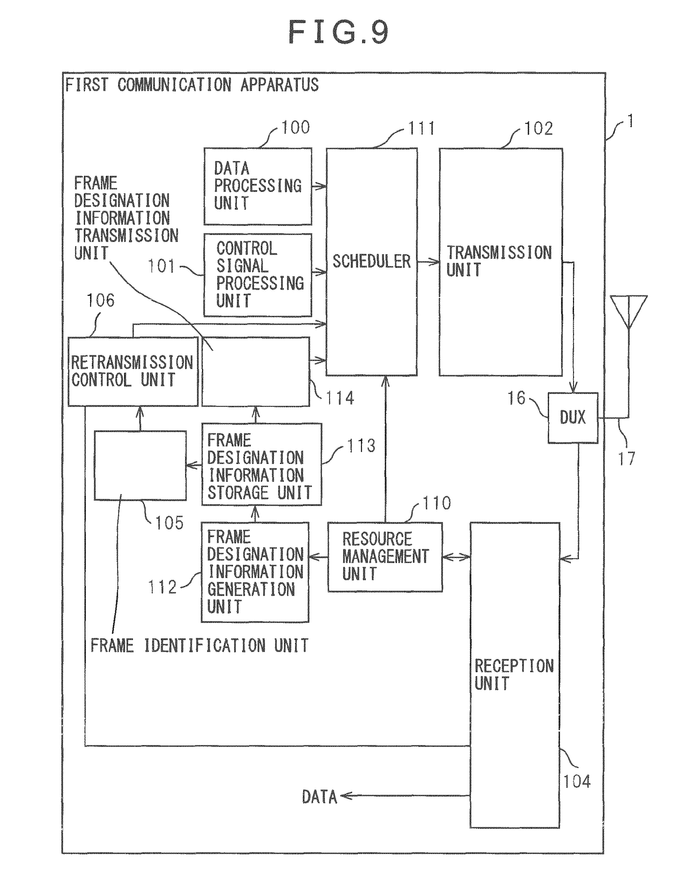

FIG. 9 is a diagram of configuration of a second example of the first communication apparatus 1. The same components of the second example as the corresponding components depicted in FIG. 3 are denoted by the same reference numerals. The components denoted by the same reference numerals perform the same operations unless otherwise specified. Furthermore, the components depicted in FIG. 3 and the functions of the components may be provided in other embodiments.

The first communication apparatus 1 includes a resource management unit 110, a scheduler 111, a frame specification information generation unit 112, a frame specification information storage unit 113, and a frame specification information transmission unit 114.

The resource management unit 110 manages radio resources of the first link and the second link between the first communication apparatus 1 and the second communication apparatus 2. The resource management unit 120 provides information on the current assignment status of the radio resources to the reception unit 104 and the scheduler 111.

Based on the information on the assignment status of the radio resources of the first link provided by the resource management unit 110, the scheduler 111 identifies radio resources used to transmit the transmit data output by the data processing unit 100, the control information output by the control information processing unit 101, and the frame specification information output by the frame specification information transmission unit 114, illustrated below. The transmission unit 102 modulates and multiplexes the transmit data, the control information, and the frame specification information based on instructions from the scheduler 111.

Furthermore, the transmission unit 102 may multiplex information on the assignment status of the radio resources of the second link assigned by the resource management unit 110, in a transmit signal as control information. Based on the information on the assignment status of the radio resources of the second link, the reception unit 104 demodulates and decodes transmit signals from the second communication apparatus 2.

The frame specification information generation unit 112 acquires information on frequency bands assigned by the resource management unit 120 for the transmission of transmit data to the second communication apparatus 2. For the frequency bands assigned for the transmission of the transmit data to the second communication apparatus 2, the frame specification information generation unit 112 generates frame specification information that specifies transmit frames for reply signals for the transmit data transmitted in the respective frequency bands.

The frame specification information storage unit 113 stores the frame specification information generated by the frame specification information generation unit 112. In accordance with the frame specification information stored in the frame specification information storage unit 113, the frame identification unit 105 determines which subframe is used to transmit the reply signal corresponding to the transmit data transmitted in each of the frequency bands.

The frame specification information transmission unit 114 transmits the frame specification information stored in the frame specification information storage unit 113, to the second communication apparatus 2 via the transmission unit 102.

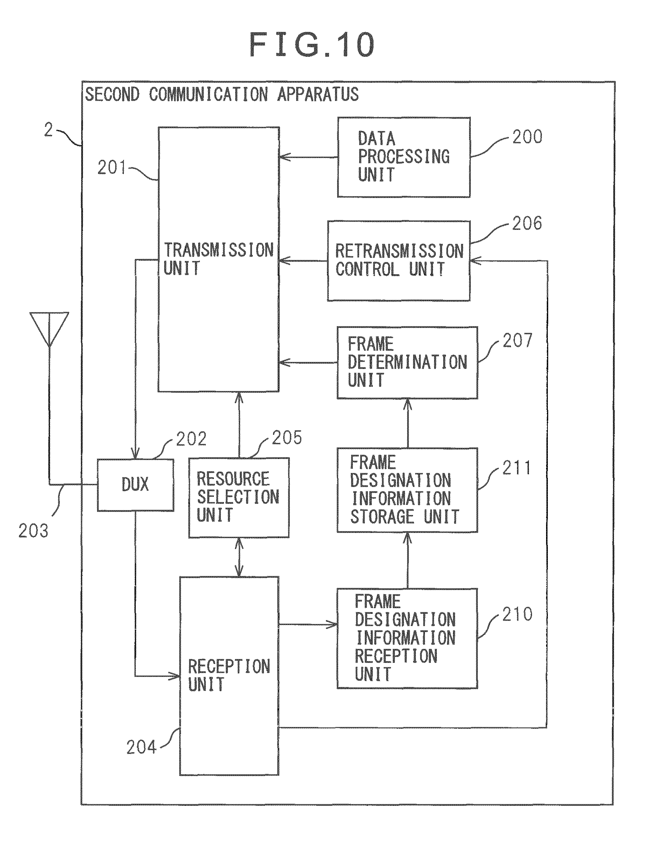

FIG. 10 is a diagram of configuration of a second example of the second communication apparatus 2. The same components of the second example as the corresponding components depicted in FIG. 6 are denoted by the same reference numerals. The components denoted by the same reference numerals perform the same operations unless otherwise specified. Furthermore, the components depicted in FIG. 6 and the functions of the components may be provided in other embodiments. The second communication apparatus 2 includes a frame specification information reception unit 210 and a frame specification information storage unit 211.

The reception unit 204 receives the information on the assignment status of the radio resources of the second link assigned by the resource management unit 110 of the first communication apparatus 1, from the first communication apparatus 1 as control information. The resource selection unit 205 acquires the information on the assignment status of the radio resources of the second link, from the reception unit 204.

The frame specification information reception unit 210 receives the frame specification information transmitted by the frame specification information transmission unit 114 of the first communication apparatus 1. The frame specification information storage unit 211 stores the frame specification information received from the frame specification information reception unit 211. The frame determination unit 207 determines the subframes in which reply signals are transmitted in accordance with the frame specification information stored in the frame specification information storage unit 211.

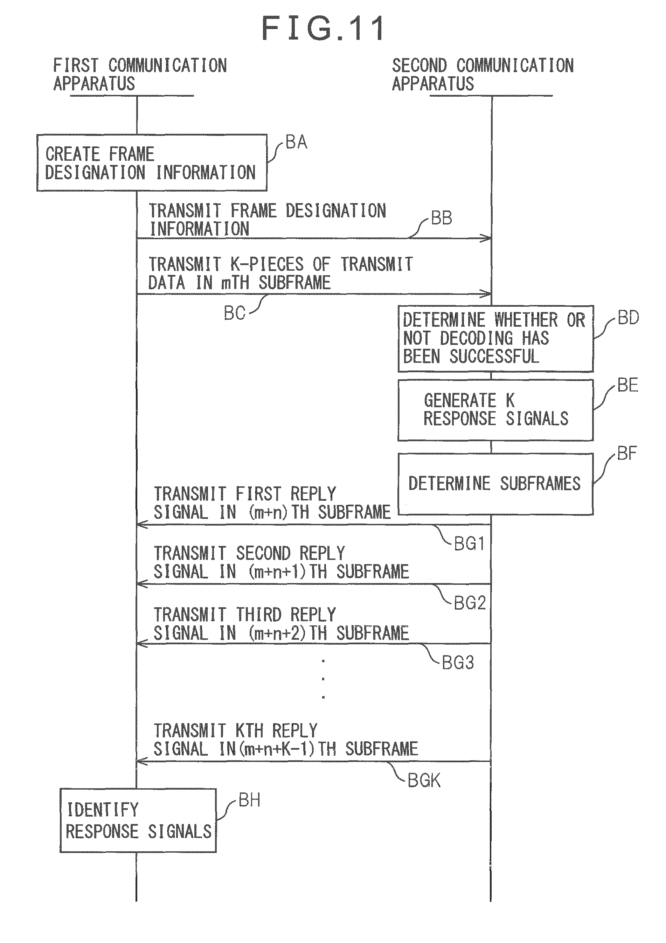

FIG. 11 is a diagram illustrating a second example of processing carried out in the communication system 100 with the first communication apparatus 1 and the second communication apparatus 2 in FIG. 9 and FIG. 10, respectively. In other embodiments, operations BA to BF, BG1 to BGK, and BH described below may be steps.

In the operation BA, the resource management unit 120 determines frequency bands assigned for the transmission of transmit data to the second communication apparatus 2. For the frequency bands assigned for the transmission of the transmit data to the second communication apparatus 2, the frame specification information generation unit 112 generates frame specification information that specifies transmit frames for reply signals for the transmit data. The frame specification information is stored in the frame specification information storage unit 113.

In the operation BB, the frame specification information transmission unit 114 transmits the frame specification information stored in the frame specification information storage unit 113 to the second communication apparatus 2. The frame specification information reception unit 210 stores the received frame specification information in the frame specification information storage unit 211.

In the operation BC, the transmission unit 102 of the first communication apparatus 1 transmits K transmit data in the mth subframe. The transmission unit 102 transmits the K transmit data in different frequency bands.

In the operation BD, the decoding success/failure determination unit 210 of the second communication apparatus 2 determines whether or not each of the K transmit data has been successfully decoded. In the operation BE, the reply signal generation unit 211 generates a reply signal indicating whether or not each of the K transmit data has been successfully decoded.

In the operation BF, the frame determination unit 207 determines K subframes assigned for the transmission of the reply signals, in accordance with the frame specification information stored in the frame specification information storage unit 211. The K subframes start in the (m+n)th subframe and ends in the (m+n+K-1)th subframe.

In the operations BG1 to BGK, the transmission unit 201 transmits, in K subframes starting in the (m+n)th subframe and ending in the (m+n+K-1)th subframe, the reply signals to which the respective subframes are assigned. The retransmission control unit 106 of the first communication apparatus 1 receives the reply signals.

In the operation BH, the frame identification unit 105 identifies the subframes in which the reply signals corresponding to the transmit data transmitted in the respective frequency bands are transmitted. The frame identification unit 105 notifies the retransmission control unit 106 of the transmit subframes for the reply signals for the respective transmit data. The retransmission control unit 106 identifies the reply signals corresponding to the transmit data transmitted in the respective frequency bands, in accordance with the notification from the frame identification unit 105.

According to the present embodiment, when the resource management unit 110 assigns frequency bands for the data transmission to the second communication apparatus 2, the frame specification information generation unit 112, in response, creates frame specification information, which is then transmitted to the second communication apparatus 2. Thus, according to the present embodiment, the first communication apparatus 1 can dynamically change subframes assigned for the transmission of reply signals in response to a change in the assignment status of the radio resources for the data transmission to the second communication apparatus 2.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.
1 First communication apparatus
2 Second communication apparatus
100 Communication system
102, 201 Transmission units
104, 204 Reception units
105 Frame identification unit
106, 206 Retransmission control units
207 Frame determination unit

## Claims

1. A reply method in which a signal is transmitted from a first communication apparatus to a second communication apparatus in one of a plurality of time frames contained in each of radio frames and in which the second communication apparatus replies to the first communication apparatus with information indicating whether or not the signal has been successfully decoded, the method comprising:
transmitting, by the first communication apparatus, signals to the second communication apparatus in a plurality of frequency bands in an identical time frame;
receiving, by the second communication apparatus from the first communication apparatus, the signals transmitted in the plurality of frequency bands in the identical time frame;
generating, by the second communication apparatus, a reply signal for a signal received in each of the plurality of frequency bands, the reply signal indicating whether the received signal has been successfully decoded; and
transmitting, by the second communication apparatus, a plurality of the reply signals separately in a plurality of time frames, each of the plurality of reply signals being generated for each of signals received in the plurality of frequency bands in the identical time frame.

2. The reply method according to claim 1, wherein the second communication apparatus determines a time frame assigned for transmission of the reply signal in accordance with a predetermined rule for specifying, according to the frequency bands, a time frame in which the reply signal corresponding to a signal transmitted in each of the frequency bands is transmitted, and
the first communication apparatus identifies the reply signal corresponding to a signal transmitted in each of the plurality of frequency bands in accordance with a rule identical to the predetermined rule.

3. The reply method according to claim 1, wherein the second communication apparatus determines a time frame to be assigned for transmission of the reply signal in accordance with frame specification information which specifies, according to the frequency bands, a time frame in which the reply signal corresponding to a signal transmitted in the respective frequency bands is transmitted, and
the first communication apparatus identifies the reply signal corresponding to a signal transmitted in each of the plurality of frequency bands in accordance with the frame specification information.

4. The reply method according to any one of claims 1 to 3, wherein an order of time frames assigned for the transmission of the plurality of reply signals corresponding to signals transmitted in a frequency band is specified according to frequencies in the frequency bands.

5. The reply method according to claim 1 or 3, wherein the plurality of frequency bands include a first band and a second band used with a priority lower than a priority of the first band, and
a time frame assigned for the transmission of the reply signal for the signal transmitted in the second band is transmitted later than a time frame assigned for the transmission of the reply signal for the signal transmitted in the first band.

6. The reply method according to claim 1 or 3, wherein when a stream signal varying over time and transmitted over a plurality of radio frames is transmitted in any of the plurality of frequency bands, in each radio frame, a time frame assigned for the transmission of the reply signal corresponding to the signal transmitted in any of the frequency bands is transmitted earlier than a time frame assigned for the transmission of the reply signal corresponding to the signal transmitted in the other of the frequency bands.

7. The reply method according to claim 1, further comprising:
determining whether transmission from the second communication apparatus to the first communication apparatus has insufficient radio-link quality or whether the second communication apparatus provides insufficient transmission power; and
based on the determination, deciding whether or not to transmit, in a plurality of time frames, the plurality of reply signals generated for the signals received in the plurality of frequency bands in the identical time frame.

8. A communication system in which signals are transmitted from a first communication apparatus to a second communication apparatus in a plurality of time frames contained in each of radio frames,
wherein the first communication apparatus comprises:
a signal transmission unit which transmits signals to the second communication apparatus in a plurality of frequency bands in an identical time frame; and
a reply signal reception unit which receives a reply signal generated for a signal transmitted in each of the plurality of frequency bands in the identical time frame, the reply signal indicating whether the transmitted signal has been successfully decoded, and the second communication apparatus comprises:
a signal reception unit which receives, from the first communication apparatus, signals transmitted in the plurality of frequency bands in the identical time frame;
a reply signal generation unit which generates a reply signal for a signal received in each of the plurality of frequency bands, the reply signal indicating whether the received signal has been successfully decoded; and
a reply signal transmission unit which transmits a plurality of the reply signals to the first communication apparatus separately in a plurality of time frames, each of the plurality of reply signals being generated for each of signals received in the plurality of frequency bands in the identical time frame.

9. A communication apparatus which transmits signals in a plurality of time frames contained in each of radio frames, the communication apparatus comprising:
a signal transmission unit which transmits the signals in a plurality of frequency bands in an identical time frame; and
a reply signal reception unit which receives a reply signal generated for a signal transmitted in each of the plurality of frequency bands, the reply signal indicating whether the transmitted signal has been successfully decoded,
wherein the reply signal reception unit receives the reply signals transmitted separately in a plurality of time frames, each of the plurality of reply signals being generated for each of signals received in the plurality of frequency bands in the identical time frame.

10. A communication apparatus which receives signals transmitted in a plurality of time frames contained in each radio frame, the communication apparatus comprising:
a signal reception unit which receives the signals transmitted in a plurality of frequency bands in an identical time frame;
a reply signal generation unit which generates a reply signal for a signal received in each of the plurality of frequency bands, the reply signal indicating whether the received signal has been successfully decoded; and
a reply signal transmission unit which transmits a plurality of the reply signals separately in a plurality of time frames, each of the plurality of reply signals being generated for each of signals received in the plurality of frequency bands in the identical time frame.
